# EUROPÄISCHE PATENTSCHRIFT

(11) **EP 3 577 070 B1**
(45) Veröffentlichungstag und Bekanntmachung des Hinweises auf die Patenterteilung: **15.02.2023**
(21) Anmeldenummer: 17826414.9
(22) Anmeldetag: 11.12.2017
(51) Int. Cl.: C04B 26/22, C04B 26/24, C04B 26/26, C04B 26/28, C04B 28/00, C04B 20/00, C01B 32/942, C04B 35/56, C04B 2/10, C22B 1/244

(54) **VERFAHREN ZUR HERSTELLUNG EINES FORMLINGS UND DANACH HERGESTELLTER FORMLING**
PROCESS FOR PRODUCING BRIQUETTES AND BRIQUETTES PRODUCED THEREBY
PROCÉDÉ POUR FABRIQUER UNE BRIQUETTE ET BRIQUETTE FABRIQUÉE SELON LEDIT PROCÉDÉ

(30) Priorität: 31.01.2017 DE 102017101890
(43) Veröffentlichungstag der Anmeldung: 11.12.2019
(73) Patentinhaber: Fels-Werke GmbH, 38640 Goslar (DE)
(72) Erfinder: STUMPF, Thomas, 38667 Bad Harzburg (DE); MEHLING, Christine, 38871 Abbenrode (DE); BOENKENDORF, Ulf, 31188 Holle (DE); WEDLER, Kirstin, 38871 Darlingerode (DE); ERNST, Nancy, 38899 Stiege (DE); DEICKE, Christin, 38875 Elbingerode (DE)
(74) Vertreter: Gramm, Lins & Partner Patent- und Rechtsanwälte PartGmbB
(86) Internationale Anmeldenummer: PCT/DE2017/101055
(87) Internationale Veröffentlichungsnummer: WO 2018/141318

(56) Entgegenhaltungen:
- BE-A- 523 158
- CH-A- 332 745
- DE-A1- 3 232 644
- DE-A1-102011 113 034
- DE-B- 1 002 740
- DE-B- 1 112 003
- US-A- 2 674 581
- US-A- 2 993 761
- DATABASE WPI Week 201644 6. April 2016 (2016-04-06) Thomson Scientific, London, GB; AN 2016-22070M XP002779176, & CN 105 460 937 A (WANG H) 6. April 2016 (2016-04-06)

## Beschreibung

Die Erfindung betrifft ein Verfahren zur Herstellung eines Formlings und die Verwendung eines so hergestellten Formlings.

Die Erfindung betrifft ferner einen Formling..

Es sind Verfahren bekannt, bei denen eine Kalkkomponente und ein Schwarzstoff gemeinsam einer thermischen Behandlung unterzogen werden, um dadurch eine Reaktion zur Erreichung eines gewünschten Produkts hervorzurufen.

So werden beispielsweise für die technische Herstellung von Kalziumcarbid Branntkalk und Schwarzstoff in Form von Koks und/oder Anthrazit im Verhältnis von 60:40 in einem geschlossenen Lichtbogenofen erhitzt. Dabei werden die Ausgangsstoffe in einer relativ groben Körnung mit Abmessung von etwa 8 bis 60 mm benutzt. Kalziumcarbid entsteht durch eine stark endotherme Reaktion bei hohen Temperaturen oberhalb von ca. 1.700°C, wobei üblicherweise Temperaturen von über 2.100°C verwendet werden. Man erhält dabei ein Produkt mit einer Zusammensetzung von ca. 80 bis 85 Gew.-% Kalziumcarbid. Der Rest besteht aus Verunreinigungen, wie Kohlenstoff und Kalziumoxid. Das dünnflüssig anfallende Carbid wird in regelmäßigen Abständen abgestochen, nach dem Erkalten gebrochen und ggf. gemahlen. Die gesamte Verarbeitung erfolgt unter Luftabschluss.

Der Nachteil des Verfahrens besteht in dem benötigten hohen Energieeinsatz und in der erforderlichen Handhabung der Ausgangsstoffe für das Verfahren.

Die CN 105460937A offenbart Pellets, die aus einer Mischung aus gebranntem Kalk, leichtflüchtiger Kohle und 2 bis 10 Gew.-% Stearat als Bindemittel gepresst werden.

Das Gewichtsverhältnis C:CaO beträgt 6-7:10. Diese Pellets werden vor der Verwendung getrocknet. Die Druckschrift beschreibt kein Brikettierhilfsmittel.

Durch DE 32 32 644 A1 ist es bekannt, die für die Herstellung von Kalziumcarbid benötigten Ausgangsstoffe in einem Vollmöllerformling bereitzustellen, sodass sich für die Herstellung von Kalziumcarbid mit den Vollmöllerformlingen eine sehr einfache Handhabung ergibt. Allerdings ist es problematisch, derartige Formlinge in stabiler Form herzustellen. Es wird daher ein sehr aufwändiges Verfahren zur Herstellung eines Formlings vorgeschlagen, bei dem Naturkalkstein und Steinkohle im Masseverhältnis von 60:40 mit oder ohne Zusatz eines Hilfsstoffs vermischt und gemeinsam auf eine Körnung von ≤ 0,18 mm zerkleinert werden. Dieses Mahlgut wird auf einer Walzenpresse zu ca. 10 mm starken Folien vorverpresst. Die Folien werden danach sofort auf eine Körnung von 5 bis 8 mm zerkleinert und dann bei einer erhöhten Verpressungstemperatur mit einem hohen Pressdruck von 150 bis 200 MPa zu Formlingen verpresst. Nach anschließender Trockenkühlung werden die entstandenen Briketts durch schonende Entgasung bei einer Entgasungstemperatur von 1.000°C pyrolisiert, um den Vollmöllerformling mit dem gewünschten CaO/C-Verhältnis von etwa 60:40 zu erhalten.

Aus der DE 10 2011 113 034 A1 ist ein Verfahren zum Herstellen eines Gasabsorptionsgranulats bekannt, das ausgebildet ist zur Verwendung als SOx- und HCl-Absorptionsgranulat, dessen Körner als SOx-Absorptionsmittel Kalksteinmehl und feinteiliges zerfasertes Cellulosefasernmaterial sowie adsorbiertes Wasser zum Verbessern der Wirksamkeit mit einem Wassergehalt bis 30 Gew.-% in ihrer Matrix aufweisen. Ein solches Granulat ist für die Herstellung von Kalziumcarbid ungeeignet.

Die CH 332 745 beschreibt ein Verfahren zum Brennen von Zement oder Kalk im Schachtofen, bei dem Formlinge aus Rohmehl und Kohle hergestellt und mit einer brennstofffreien Schale einheitlicher Dicke überzogen werden. Der Kohlegehalt des Kerns ist geringer als es der Gleichung CaCOs+C = 2 CO + CaO entspricht. Solche Formlinge sind vergleichsweise aufwändig in der Herstellung.

Aufgrund des hohen Aufwandes für die Herstellung des Formlings hat sich dieses Verfahren in der Praxis nicht als wirtschaftlich herausgestellt. Es besteht daher seit langer Zeit ein Bedürfnis, einen Formling der genannten Art in einem einfacheren Verfahren herzustellen, um damit wirtschaftliche Vorteile zu erzielen.

Der vorliegenden Erfindung liegt daher die Aufgabe zugrunde, einen Formling bereitzustellen, der formstabiler ist.

Diese Aufgabe wird erfindungsgemäß mit einem Verfahren mit den Merkmalen von Anspruch 1 und der Verwendung eines so hergestellten Formlings zum Herstellen von Kalciumcarbid gelöst. Die Erfindung löst das Problem zudem durch einen Formling mit den Merkmalen von Anspruch 7.

Das erfindungsgemäße Verfahren ermöglicht somit eine einfache Herstellung des Formlings mit den Hauptbestandteilen Kalkkomponente und Schwarzstoff, ohne dass hierfür die bisher bekannt gewordenen umständlichen und zahlreichen Verfahrensschritte oder eine durch einen zusätzlichen Wärmeeintrag oder eine exotherme Reaktion bewirkte wesentliche Temperaturerhöhung nötig wären. Umfangreiche Versuche haben ergeben, dass es möglich ist, die Formlinge aus den Ausgangsmaterialien stabil herzustellen, wenn eine geeignete Kombination von Brikettierhilfen verwendet wird. Dabei kommt es sowohl darauf an, ein wirksames Bindemittel zu verwenden, als auch ein faserhaltiges Material, als Brikettierhilfe einzusetzen. Durch das faserhaltige Material, insbesondere in Form von Zellulosefasern, wird offenbar ein stabiles Gerüst mit den Hauptkomponenten erzeugt, das zur Stabilität des Formlings bei relativ geringer spezifischer Presskraft führt. Eine anschließende Wärmebehandlung ist möglich, jedoch für die Ausbildung eines stabilen Formlings regelmäßig nicht erforderlich oder sinnvoll.

Das Zellulosefasermaterial sollte einen Anteil von 0,5 Gew.-% in der Mischung des Formlings nicht unterschreiten. Stabile Ergebnisse werden auch bei höheren Anteilen, beispielsweise bis zu 5 Gew.-% erzielt, wobei der Anteil von 2 Gew.-% in durchgeführten Versuchen ein gewisses Optimum darstellt, sodass ein bevorzugter Bereich für das Zellulosefasermaterial zwischen 1 und 3 Gew.-% liegt. Die in dem Zellulosefasermaterial enthaltenen Fasern sollten hinreichend zerkleinert sein und eine Faserlänge von 2 mm, bevorzugt 1 mm, nicht überschreiten. Bevorzugt ist die Verwendung von Zellulosefasermehl mit deutlich geringeren überwiegenden Faserlängen. Eine untere Grenze der überwiegenden Faserlänge liegt bei 20 µm.

Der Anteil des Bindemittels kann klein gehalten werden und zwischen 0,1 und 5 Gew.-% liegen. Hierdurch ist es möglich, die Kosten des Formlings niedrig zu halten. Als Bindemittel hat sich insbesondere ein Stearat, insbesondere ein Metallstearat, in Kombination mit dem Zellulosefasermaterial, als geeignet erwiesen. Beispiele geeigneter Stearate sind Calciumstearat, Zinkstearat, Magnesiumstearat usw. Möglich ist auch die Verwendung von Stärke oder Tonmineral als Bindemittel mit dem Zellulosefasermaterial, wobei allerdings die optimale Wirkung des Stearats nicht ganz erreicht wird. Ein als Bindemittel gebräuchliches Tonmineral ist Bentonit. Möglich erscheint ferner die Verwendung weiterer bekannter Bindemittel, wie beispielsweise Sulfitablauge und Melasse. Bei einem Stearat als Bindemittel kann ein Anteil von 0,1 bis 1 Gew.-% ausreichend sein, während beispielsweise Stärke oder Bentonit mit höheren Anteilen bis 5 Gew.-% sinnvoll sein können.

Für die Herstellung des Formlings als Ausgangstoff für die Herstellung von Kalziumcarbid werden die Kalkkomponente - berechnet auf das CaO-Äquivalent - und der Schwarzstoff - berechnet auf das C-Äquivalent - im Gewichtsverhältnis von 70 bis 50 zu 30 bis 50, insbesondere 65 bis 55 zu 35 bis 45, zugegeben.

Der Anteil der Kalkkomponente wird auf das CaO-Äquivalent berechnet. Dies ist zu berücksichtigen, wenn nicht gebrannter Kalk, sondern - zumindest auch - Kalkstein (CaCOs) als Ausgangsstoff verwendet wird. Bei der Herstellung von gebranntem Dolomit wird an Stelle des CaO-Äquivalents das CaO + MgO-Äquivalent angewendet. Die Berechnung auf das C-Äquivalent beim Schwarzstoff trägt etwaigen Verunreinigungen des Schwarzstoffs Rechnung.

Erfindungsgemäß ist es in überraschend einfacher und wirtschaftlich vorteilhafter Weise möglich, einen Formling aus Kalkkomponente und Schwarzstoff herzustellen, der für eine wirtschaftliche Verarbeitung in verschiedenen Herstellungs- und Bearbeitungsverfahren verwendbar ist. Als Schwarzstoffe werden Koks, Anthrazit und/oder Kohle, insbesondere Steinkohle, verwendet. Eine anschließende Pyrolysierung des Formlings ist regelmäßig nicht erforderlich. Der Erfindung liegt ferner die Erkenntnis zugrunde, dass die Kalkkomponente zumindest weitgehend frei von Kalkhydrat sein muss. Kalkhydrat steht der Herstellung eines mit Sicherheit stabilen Formlings entgegen, sodass bei dem erfindungsgemäßen Verfahren darauf zu achten ist, dass beispielsweise eingesetzter gebrannter Kalk nicht in größerem Maße hydratisiert. Aus diesem Grund ist es in der Praxis zweckmäßig, dafür zu sorgen, dass die Mischung und Verpressung mit einem Feuchtegehalt von nicht über 5 Gew.-% erfolgt.

Beispielsweise beim Einsatz für die Herstellung von Kalziumcarbid zeigt es sich, dass die Verwendung der erfindungsgemäß hergestellten Formlinge nicht nur eine Vereinfachung der Handhabung sondern auch eine merkbare Reduzierung der eingesetzten Energiemenge bei gleicher Ausbeute mit sich bringt.

In Versuchen der Erfinder hat es sich bewährt, den Formling mit einer Querschnittsfläche senkrecht zur Pressrichtung zwischen 5 und 25 cm² herzustellen. Das Gewicht des Formlings beträgt vorzugsweise zwischen 5 und 35 g, besonders bevorzugt zwischen 12 und 22 g.

Die Verpressung des Formlings kann dafür mit einer relativ geringen Presskraft erfolgen, die zwischen 100 und 250 kN liegt.

### Beispiel 1

Als Kalkkomponente wurde Weißfeinkalk (CaO) mit einer Kornverteilung verwendet, die folgende Verteilung aufwies:

| | | | |
|---|---|---|---|
| Partikelgröße | X₀₅ | µm | 0,86 |
| | X₁₀ | µm | 1,23 |
| | X₅₀ | µm | 8,79 |
| | X₉₀ | µm | 57,72 |
| | X₉₈ | µm | 84,19 |
| | X₉₉ | µm | 93,63 |

Dies bedeutet, dass 5% der Partikel des Weißfeinkalks eine Partikelgröße < 0,86 µm aufweist, 50% eine Partikelgröße < 8,79 µm, 90% eine Partikelgröße < 57,72 µm und 99% eine Partikelgröße < 93,63 µm. Anders ausgedrückt ist nur 1% der Partikel >93,63 µm.

Als mittlere Partikelgröße kann der Wert X₅₀ angenommen werden, also ca. 9 µm.

### Beispiel 2

Als Kalkkomponente kann auch eine gröbere Sorte Weißkalk verwendet werden, ohne dass hierdurch wesentliche Änderungen zu beobachten wären. Der gröbere Kalk führt zu einer geringeren Staubentwicklung und ist im Ergebnis leichter zu brikettieren.

Die Kornverteilung des gröberen Kalks ist in diesem Beispiel aus der nachstehenden Siebanalyse ersichtlich:

| | |
|---|---|
| R + 2,0 mm: | 1,0% |
| R + 1,0 mm: | 20,7 % |
| R + 0,2 mm: | 46,4% |
| R + 0,09 mm: | 58,6% |

### Beispiel 3

Als Schwarzstoff ist Koksgrus verwendet worden. Dabei ist Koksgrus mit einer Partikelverteilung 0 bis 1 mm oder mit einer Partikelverteilung 1 bis 3 mm hergestellt worden. Die Kornverteilung für die beiden Kokssorten ergibt sich wie folgt:

| Koks 0-1 mm | Anteile in Gew.-% | Koks 1-3 mm | Anteile in Gew.-% |
|---|---|---|---|
| R+2 mm | 0,1 | R+5 mm | 1,3 |
| R+1 mm | 8,3 | R+3,15 mm | 29,3 |
| R+0,5 mm | 43 | R+2 mm | 61,3 |
| R+0,2 mm | 77,7 | R+1 mm | 90,3 |
| R+0,09 mm | 93,3 | R+0,5 mm | 97,1 |

### Beispiel 4

Als Brikettierhilfe wurde Zellulosefasermaterial, gewonnen aus zerkleinerten Papierfasern, verwendet, bei dem die Fasern folgende Größenverteilung aufwiesen:

| | |
|---|---|
| > 32 µm: | > 60 % |
| > 200 µm: | < 10 % |
| > 500 µm: | < 1 % |

Das Zellulosefasermaterial als Rohzellulose weist graue Fasern auf und hat eine Ausgangsschüttdichte von 75 bis 110 g/l und ist unter der Bezeichnung TECH-NOCEL 1004-7N der CFF GmbH und Co. KG in 98704 Gehren, Deutschland, erhältlich.

Mit den Komponenten gemäß Beispielen 1 bis 3 sind Mischungen hergestellt worden, wie sich aus der nachfolgenden Tabelle ergibt:

| Auflistung | WK grob | WFK fein | Koks 0-1 mm | Koks 1-3 mm | Zellulosefasermaterial | Calciumstearat | Shatter-Test (Siebdurchgang) | Ergebnis-Bewertung |
|---|---|---|---|---|---|---|---|---|
| 1 | | 99,75 | | | | 0,25 | ca. 20 | ++ |
| 2 | 99,75 | | | | | 0,25 | ca. 10 | +++ |
| 3 | | 59,7 | 38,05 | | 2 | 0,25 | ca. 30 | ++ |
| 4 | | 59,7 | | 38,05 | 2 | 0,25 | ca. 30 | ++ |
| 5 | | 60,9 | 38,85 | | | 0,25 | * | - |
| 6 | | 59,9 | | 38,01 | 2 | | ca. 40 | + |

| | | | | | | | | |
|---|---|---|---|---|---|---|---|---|
| alle Angaben in Gew.-% | | | | | | | | |

Formlinge aus Mischungen ohne Zellulosefasermaterial und/oder nicht mit einem CaO:C-Gewichtsverhältnis von 70-50 zu 30-50 sind nicht erfindungsgemäß.

Für den Brikettierversuch 3 in der Tabelle von Beispiel 4 wurde eine KR Komarek B400 Rollenpresse verwendet. Folgende Parameter wurden gewählt:

| Rollentyp | Taschen (pockets) |
|---|---|
| Rollenbreite | 120 mm |
| Rollendurchmesser | 457 mm |
| Taschenzahl | 162 |
| Reihenzahl | 3 |
| Taschenvolumen | 10 cm³ |
| Rollenspalt (ohne Material) | 1,5 mm |
| Rollengeschwindigkeit | 12 U/min |
| Dosierschnecke | horizontal |
| Dosiergeschwindigkeit | 134 U/min |
| Druck | 168 bar |
| Spezifische Anpresskraft | 173 kN/cm |

Wie sich aus der Spalte Ergebnis-Bewertung ergibt, ist die Verwendung von Zellulosefasermaterial in Verbindung mit Calciumstearat für die Herstellung ausreichend stabiler Formlinge erforderlich. Das als Vergleichsbeispiel 5 aufgeführte Beispiel führte zu nicht ausreichenden Stabilitäten für die Formlinge. Die Ausführungsbeispiele 1 und 2 sind ebenfalls nur Vergleichsbeispiele, die nicht die erfindungsgemäße Mischung der Kalkkomponente mit einer Schwarzkomponente beinhalten. Das Ausführungsbeispiel 5 dient als Vergleichsbeispiel für die Verwendung des Bindemittels Calciumstearat ohne Zellulosefasermaterial, während das Vergleichsbeispiel 6 das Brikettierergebnis für die Verwendung von Zellulosefasermaterial ohne Bindemittel Calciumsterat wiedergibt.

Die Formlinge wurden in einer Größe von 3,8 cm x 2,7 cm x 1,8 cm hergestellt. Die Stabilität der hergestellten Formlinge ist mit einem Shatter-Test getestet worden. Dabei wurde ein Rohr der Länge 2 m und mit einem Durchmesser von 30 cm verwendet, das mit zwei Deckeln verschlossen und mit dem das Material dreimal um 180° gestürzt worden ist. Die Einwaage der Formlinge betrug 2 kg und zur Auswaage wurde ein Sieb mit 10 mm Maschenweite verwendet.

Daraus ergab sich die für die Versuchsergebnisse durchgeführte Bewertung der Stabilität der hergestellten Formlinge.

Für die Ausführungsbeispiele 3 und 4 ergab sich bei dem Shatter-Test ein Feinanteil < 10 mm von etwa 30 %. Dies wird als ausreichend stabil für ein Brikett angesehen.

Größere Koksgrusstücke, insbesondere oberhalb von 5 mm Länge, führen dazu, dass für die Brikettierung unnötig hohe Kräfte aufgewendet werden müssten und eine erhebliche Belastung der Brikettierwerkzeuge in Kauf zu nehmen wäre. Daher ist von der Durchführung dieses Versuchs abgesehen worden.

### Beispiel 5

Zur Feststellung der Eignung der vorgesehenen Bindemittel Stearat, Stärke und Tonmineral wurden Brikettierversuche mit Weißfeinkalk und Koksgrus gemäß der Zusammensetzung 3 der Tabelle aus Beispiel 4 vorgenommen. Zu den verwendeten 2 Gew.-% Zellulosefasermaterial wurden als Bindemittel in Parallelversuchen 0,25 Gew.-% Calciumstearat, 0,25 Gew.-% Stärke, 0,25 Gew.-% Bentonit und 2 Gew.-% Bentonit als Tonmineral hinzugefügt.

Der höhere Anteil an Bentonit wurde getestet, da Bentonit als Bindemittel preisgünstig zu erhalten ist.

In allen Fällen wurden stabile Briketts hergestellt. Eine etwas geringere Stabilität ergab sich mit Stärke als Bindemittel, während Bentonit in beiden Konzentrationen zu einer höheren Festigkeit (gegenüber Stärke) führt. Calciumstearat als Bindemittel führt zu sehr stabilen Briketts, die darüber hinaus aufgrund einer glänzenden Oberfläche ein gutes Aussehen haben.

Alle Bindemittel haben sich daher zusammen mit Zellulosefasermaterial als geeignete Brikettierhilfen erwiesen.

### Beispiel 6

Mit den hergestellten Formlingen gemäß Beispiel 5 sind Brennversuche in einem Technikumsofen bei 2.200°C mit Argon als Prozessgas durchgeführt worden. Neben den hergestellten Formlingen wurden als Vergleichsversuche identische Brennversuche mit herkömmlich aufbereiteten Ausgangsstoffen durchgeführt. Die herkömmlichen Ausgangsstoffe waren Weißstückkalk und Anthrazit mit einer Körnung von 2 bis 12 mm im Gewichtsverhältnis 61:39.

Die Ofenfahrt wurde weitestgehend an die realen Bedingungen im elektrischen Lichtbogenofen angepasst. Es erfolgte ein allmähliches Aufheizen in 5 bis 10 K/min-Schritten, eine Haltezeit von 60 Min. bei 2.200°C sowie ein allmähliches Abkühlen unter weiterem Argonstrom.

Während mit den erfindungsgemäß hergestellten Formlingen ein vollständiges Aufschmelzen zu Kalziumcarbid zu beobachten war und keine stückigen Rückstände erkennbar waren, waren bei der Referenzprobe nach dem Brennvorgang noch die stückige Ausgangsform der Rohstoffe erkennbar. Die mit den erfindungsgemäßen Formlingen durchgeführten Brennvorgänge führten zu einer glatten Masse des hergestellten Kalziumcarbids im Tiegel.

Während für die Referenzprobe die Energiezufuhr bzw. die Haltezeit von 60 Min. bei 2.200°C nicht ausgereicht hat, um eine vollständige Umsetzung der stückigen Ausgangsstoffe herbeizuführen, ist eine vollständige Umsetzung unter gleichen Bedingungen mit den erfindungsgemäßen Formlingen erfolgt.

### Beispiel 7

Es sind entsprechende Formlinge mit einem Gesamtanteil von 2 Gew.-% Brikettierhilfen (1,2 Gew.-% Bentonit mit 0,8 Gew.-% Zellulosefasermaterial bzw. 1,2 Gew.-% Maisstärke mit 0,8 Gew.-% Zellulosefasermaterial) hergestellt worden. Diese ließen sich ebenfalls durchweg stabil ausbilden.

Demgegenüber verringerte sich die Anzahl an stabilen Formlingen, wenn der Gesamtanteil der Brikettierhilfen auf 0,6 Gew.-% gesenkt wurde. Zwar ließen sich hierbei unter Verwendung von Calciumstearat als Bindemittel immer noch stabile Formlinge herstellen, der Anteil an nicht stabilen Formlingen stieg jedoch merkbar an.

Dies lässt den Schluss zu, dass für eine sichere Herstellung stabiler Briketts vorzugsweise wenigstens etwa 1 Gew.-% Brikettierhilfen verwendet werden sollten. Die Erhöhung des Anteils der Brikettierhilfen erhöht die Sicherheit für die Herstellung stabiler und verwendbarer Formlinge. Der Anteil von 8 Gew.-% Brikettierhilfe kann aber - nicht aus technischen, jedoch aus Kostengründen - als eine in der Praxis sinnvolle obere Grenze angesehen werden. Bei der Verwendung von Stearat als Bindemittel kann der Anteil von 4 Gew.-% Brikettierhilfe als sinnvollere obere Grenze gelten.

## Patentansprüche

1. Verfahren zur Herstellung eines Formlings
(i) mit den Hauptbestandteilen
(ia) Kalkkomponente in Form von gebranntem Kalk, gebranntem Dolomit, Kalkstein und/oder Dolomitstein und
(ib) Schwarzstoff in Form von Koks, Anthrazit und/oder Steinkohle,
(ii) mit wenigstens einem als Brikettierhilfe wirksamen Hilfsstoff in Form von Zellulosefasermaterial und
(iii) mit einem Bindemittel
wobei die Kalkkomponente mit dem Schwarzstoff sowie mit zwischen 0,5 und 5 Gew.-% bezogen auf die Mischung des Formlings an Zellulosefasermaterial und mit zwischen 0,1 und 5 Gew.-% bezogen auf die Mischung des Formlings an
Bindemittel gemischt und anschließend zu dem Formling verpresst wird, wobei die Kalkkomponente - berechnet auf das CaO-Äquivalent - und der Schwarzstoff - berechnet auf das C-Äquivalent - im Gewichtsverhältnis von 70-50 zu 30-50 zugegeben werden,
wobei die Mischung und Verpressung mit einem Feuchtegehalt nicht über 5 Gew.-% erfolgt,
wobei der Schwarzstoff eine Norm-Partikelgröße zwischen 0 und 5 mm aufweist.

2. Verfahren nach Anspruch 1, **dadurch gekennzeichnet, dass** die Verpressung zu dem Formling ohne zusätzlichen Wärmeeintrag erfolgt.

3. Verfahren nach Anspruch 1 oder 2, **dadurch gekennzeichnet, dass** das Zellulosefasermaterial eine durchschnittliche Faserlänge zwischen 20 µm und 2,5 mm aufweist.

4. Verfahren nach einem der Ansprüche 1 bis 3, **dadurch gekennzeichnet, dass** das Bindemittel ein Stearat, Tonmineral und/oder Stärke ist.

5. Verfahren nach Anspruch 4, **dadurch gekennzeichnet, dass** das Bindemittel ein Stearat mit einem Anteil von 0,1 bis 1 Gew.-% bezogen auf die Mischung des Formlings ist.

6. Verfahren nach einem der Ansprüche 1 bis 5, **dadurch gekennzeichnet, dass** die Kalkkomponente - berechnet auf das CaO-Äquivalent - und der Schwarzstoff - berechnet auf das C-Äquivalent - im Gewichtsverhältnis von 65 bis 55 zu 35 bis 45 zugegeben werden.

7. Formling aus
(i) den Hauptbestandteilen
(ia) Kalkkomponente in Form von gebranntem Kalk, gebranntem Dolomit, Kalkstein und/oder Dolomitstein und
(ib) Schwarzstoff in Form von Koks, Anthrazit und/oder Steinkohle,
(ii) mit wenigstens einem als Brikettierhilfe wirksamen Hilfsstoff in Form von Zellulosefasermaterial und
(iii) mit einem Bindemittel,
(iv) wobei der Schwarzstoff eine Norm-Partikelgröße zwischen 0 und 5 mm aufweist und wobei der Formling
- die Kalkkomponente und den Schwarzstoff sowie zu zwischen 0,5 und 5 Gew.-% bezogen auf die Mischung des Formlings an Zellulosefasermaterial und zu zwischen 0,1 und 5 Gew.-% bezogen auf die Mischung des Formlings an Bindemittel enthält,
- die Kalkkomponente - berechnet auf das CaO-Äquivalent - und den Schwarzstoff - berechnet auf das C-Äquivalent - im Verhältnis von 70-50 zu 30-50 enthält und
- einen Feuchtegehalt nicht über 5 Gew.-% aufweist.

8. Formling nach Anspruch 7, **dadurch gekennzeichnet, dass** das Bindemittel ein Stearat mit einem Anteil von 0,1 bis 1 Gew.-% bezogen auf die Mischung des Formlings ist.

9. Verwendung eines Formlings hergestellt nach einem Verfahren nach einem der Ansprüche 1 bis 6 in einem Verfahren zum Herstellen von Kalziumcarbid.

## Claims

1. A method for producing a shaped body
(i) with the main components
(ia) lime component in the form of burnt lime, burnt dolomite, limestone and/or dolomite stone, and
(ib) black mass in the form of coke, anthracite and/or hard coal,
(ii) with at least one adjuvant that acts as a briquetting aid in the form of cellulose fibre material and
(iii) with a binding agent
wherein the lime component is mixed with the black mass and with between 0.5 and 5% by weight, based on the mixture of the blank, of cellulose fibre material and with between 0.1 and 5% by weight, based on the mixture of the blank, of binding agent and then pressed to form the blank,
wherein the lime component - calculated on the basis of the CaO equivalent - and the black mass - calculated on the basis of the C equivalent - is added in a weight ratio of 70-50 to 30-50,
wherein the mixing and pressing are performed with a moisture content of not more than 5% by weight,
the black mass having a standard particle size of between 0 and 5 mm.

2. The method according to claim 1, **characterised in that** the pressing to form the blank is performed without any additional heat input.

3. The method according to claim 1 or 2, **characterised in that** the cellulose fibre material has an average fibre length of between 20µm and 2.5 mm.

4. The method according to one of the claims 1 to 3, **characterised in that** the binding agent is a stearate, clay material and/or starch.

5. The method according to claim 4, **characterised in that** the binding agent is a stearate with a proportion of 0.1 to 1% by weight in relation to the mixture of the blank.

6. The method according to one of the claims 1 to 5, **characterised in that** the lime component - calculated on the basis of the CaO equivalent - and the black mass - calculated on the basis of the C equivalent - are added in a weight ratio of 65 to 55 to 35 to 45.

7. A blank comprising
(i) the main components
(ia) a lime component in the form of burnt lime, burnt dolomite, limestone and/or dolomite rock, and
(ib) black mass in the form of coke, anthracite and/or coal,
(ii) with at least one adjuvant that acts as a briquetting aid in the form of cellulose fibre material and
(iii) with a binding agent,
(iv) the black mass having a standard particle size of between 0 and 5 mm
and
the blank
- containing the lime component and the black mass and between 0.5 and 5% by weight, based on the mixture of the blank, of cellulose fibre material and between 0.1 and 5% by weight, based on the mixture of the blank, of binding agent,
- the lime component - calculated on the basis of the CaO equivalent - and the black mass - calculated on the basis of the C equivalent - being added in a weight ratio of 70-50 to 30-50,
- comprising a moisture content of no more than 5% by weight.

8. The blank according to claim 7, **characterised in that** the binding agent is a stearate with a proportion of 0.1 to 1% by weight in relation to the mixture of the blank.

9. The use of a blank produced according to a method according to one of the claims 1 to 6 in a method for producing calcium carbide.

## Revendications

1. Procédé de fabrication d'une briquette comprenant
(i) les composants principaux que sont
(ia) un composant calcaire sous forme de chaux vive, de dolomite calcinée, de calcaire et/ou de dolomie et
(ib) une matière noire sous forme de coke, d'anthracite et/ou de charbon,
(ii) au moins un adjuvant agissant comme auxiliaire de briquetage sous forme de matériau fibreux cellulosique et
(iii) un liant,
dans lequel le composant calcaire est mélangé à la matière noire ainsi qu'au matériau fibreux cellulosique, compris entre 0,5 et 5 % en poids par rapport au mélange de la briquette, et à un liant, compris entre 0,1 et 5 % en poids par rapport au mélange de la briquette, et est ensuite pressé pour obtenir la briquette,
le composant calcaire - calculé sur l'équivalent CaO - et la matière noire - calculée sur l'équivalent C - sont ajoutés dans un rapport pondéral de 70 à 50 sur 30 à 50,
le mélangeage et le pressage s'effectuent à une teneur en humidité ne dépassant pas 5 % en poids, la matière noire présente une taille de particules normalisée entre 0 et 5 mm.

2. Procédé selon la revendication 1, **caractérisé en ce que** le pressage pour obtenir la briquette s'effectue sans apport de chaleur supplémentaire.

3. Procédé selon la revendication 1 ou 2, **caractérisé en ce que** le matériau fibreux cellulosique présente une longueur moyenne de fibres comprise entre 20 µm et 2,5 mm.

4. Procédé selon l'une des revendications 1 à 3, **caractérisé en ce que** le liant est un stéarate, un minéral argileux et/ou de l'amidon.

5. Procédé selon la revendication 4, **caractérisé en ce que** le liant est un stéarate dans une proportion de 0,1 à 1 % en poids par rapport au mélange de la briquette.

6. Procédé selon l'une des revendications 1 à 5, **caractérisé en ce que** le composant calcaire - calculé sur l'équivalent CaO - et la matière noire - calculée sur l'équivalent C - sont ajoutés dans un rapport pondéral de 65 à 55 sur 35 à 45.

7. Briquette constituée
(i) des composants principaux que sont
(ia) un composant calcaire sous forme de chaux vive, de dolomite calcinée, de calcaire et/ou de dolomie, et
(ib) une matière noire sous forme de coke, d'anthracite et/ou de charbon,
(ii) comprenant au moins un adjuvant agissant comme auxiliaire de briquetage sous forme de matériau fibreux cellulosique et
(iii) un liant,
(iv) dans laquelle la matière noire présente une taille de particules normalisée entre 0 et 5 mm et
la briquette
- comprend le composant calcaire et la matière noire ainsi que le matériau fibreux cellulosique, compris entre 0,5 et 5 % en poids par rapport au mélange de la briquette, et le liant, compris entre 0,1 et 5 % en poids par rapport au mélange de la briquette,
- comprend le composant calcaire - calculé sur l'équivalent CaO - et la matière noire - calculée sur l'équivalent C - dans un rapport pondéral de 70 à 50 sur 30 à 50, et
- présente une teneur en humidité ne dépassant pas 5 % en poids.

8. Briquette selon la revendication 7, **caractérisée en ce que** le liant est un stéarate dans une proportion de 0,1 à 1 % en poids par rapport au mélange de la briquette.

9. Utilisation d'une briquette fabriquée par un procédé selon l'une des revendications 1 à 6 dans un procédé de production de carbure de calcium.
